**Europäisches Patentamt**

**European Patent Office**

**Office européen des brevets**

(11) Veröffentlichungsnummer: **0 198 518**
A2

# (12) EUROPÄISCHE PATENTANMELDUNG

(21) Anmeldenummer: 86200004.9

(22) Anmeldetag: 06.01.86

(51) Int. Cl.⁴: **B 65 G 51/03**

(30) Priorität: 06.04.85 DE 3512584

(43) Veröffentlichungstag der Anmeldung: 22.10.86
Patentblatt 86/43

(84) Benannte Vertragsstaaten: **AT BE CH DE FR GB IT LI LU NL SE**

(71) Anmelder: **Fa. Toma, Buderusplatz 1, D-6330 Wetzlar (DE)**

(72) Erfinder: **Frank, Helmut, Königsbergerstrasse 6, D-6333 Braunfels (DE)**

(54) Anlage zum pneumatischen Schwebefördern, stückartiger Güter.

(57) Beschrieben wird eine Anlage zum pneumatischen Schwebendfördern stückartiger Güter in offenen Rinnen verschiedener Formgebung, in denen bei entsprechender Abdeckung und Gestaltänderung die Güter beliebig gedreht oder gewendet, sonst auch beschleunigt, gebremst, verteilt, gestaut, gestoppt und gestapelt werden können, wobei Luftfilme für jeweils mit den Wänden berührungsfreie Bewegung sorgen. Die berührungsfreie Förderung wird durch Hublöcher (6) und vorzugsweise schräg zur Förderachse (7) angeordnete Schlitze (4, 5) erzielt. Eine waagrechte Unterteilung des Luftkanals verringert die Zahl der nötigen Ventilatoren. Ein am Anfang der Förderbahn sich über dessen volle Breite erstreckender Schlitz bewirkt eine besonders wirkungsvolle Beschleunigung der Fördergüter.

Das Abbremsen erfolgt durch vorherige Anordnung der Förderschlitze (4, 5).

Bei gewolltem Stau der Güter bleiben diese durch Regelung der Drehzahl des entsprechenden Ventilators oder seines Drallreglers schwebend stehen.

Auch an den Zuführkanälen zu parallel arbeitenden Maschinen sind die Seitenwände mit Schlitzen versehen.

Sollen Güter wie z.B. Platten gestapelt werden, rutschen diese beschädigungsfrei in eine entsprechende Vorrichtung (30–38), wobei ein Hubzylinder (31, 32) sich nach unten bewegt und die Platten laufend aufnimmt, bis ein Schieber (35, 36) den Stapel ausschiebt, während ein vorgeschobener Schieber (33) die weiter ankommenden Platten (29) vorher aufnimmt.

Kanalquerschnitt

Beschreibung

Die Erfindung betrifft eine Anlage zum pneumatischen Schwebendfördern stückartiger Güter gemäß Anspruch 1.

Bekannt ist das pneumatische Fördern stückartiger Güter in offenen Rinnen mittels Luft, die durch verschiedenartige Öffnungen durch den Boden der Rinne aus einem darunter befindlichen Kanal tritt, den Gegenstand anhebt und ihn schwebend, wie auf einem Luftkissen transportiert. Letzteres wird allein auch durch entsprechendes Gefälle der Rinne bewirkt, so nach DE - PS 1291680.

Durch dichteres Anordnen solcher Luftaustritte kann man auch das Beschleunigen oder Überwinden von Steigungen der zu fördernden Güter bewirken, wie in der DE - PS 1267603 beschrieben, oder gemäß DE - PS 2509469 auch senkrecht nach oben fördern.

Die Seitenwände solcher trogförmigen Förderbahnen dienen einerseits dazu, die Förderluft zu einem bestimmten Maße zusammenzuhalten, um den Luft- und damit Energieverbrauch in wirtschaftlichen Grenzen zu halten, was gemäß DE - PS 1263608 gerade nicht der Fall ist, andererseits sollen sie das Ausbrechen der Güter verhindern, diese also führen und sind daher nach DE - PS 1291680 und 26454465 dafür besonders ausgebildet.

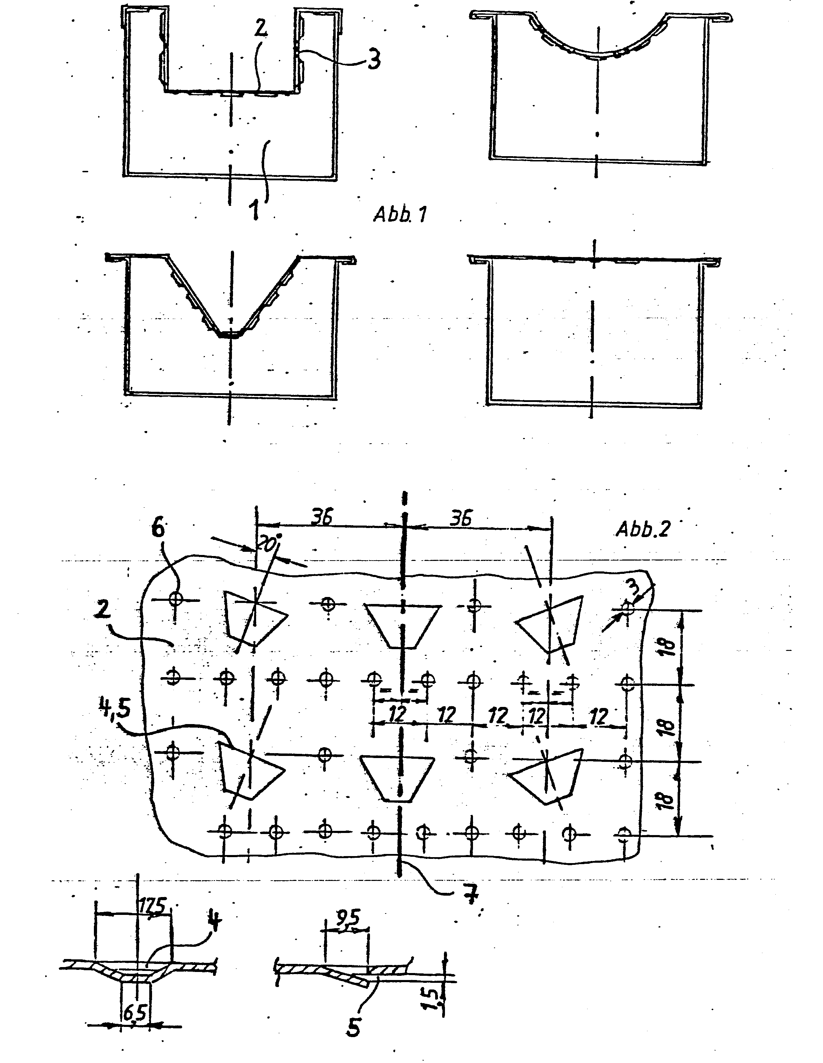

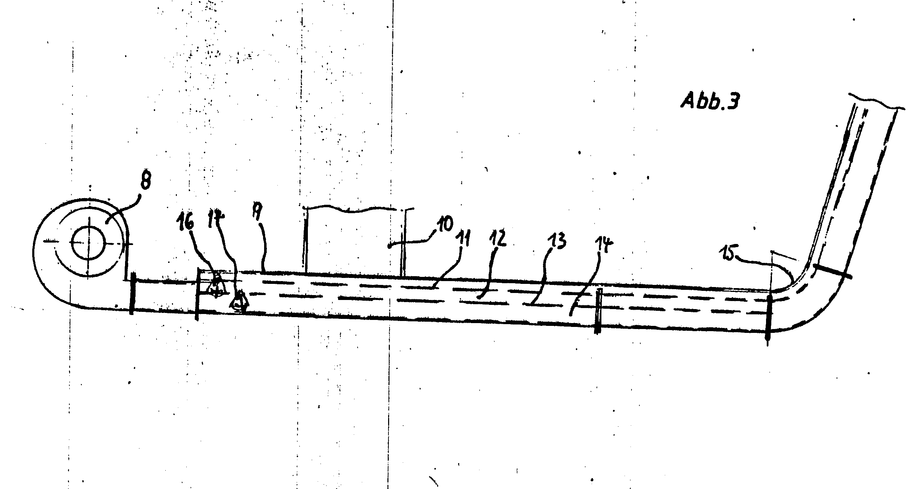

Nun werden insbesondere in der Lebensmittelindustrie noch unverpackte Güter von einer Verarbeitungsstufe zur nächsten auch pneumatisch gefördert, wie beispielsweise Schokeladenerzeugnisse, Kekse, Lebkuchen, Fleischstücke oder Sandwiches. Hierbei entsteht Abrieb, der sich in den Förderbahnen absetzt und zu erhöhtem Reinigungsaufwand zwingt, insbesondere, wenn pneumatisch geförderte Güter hierbei gedreht, gekippt, beschleunigt, gebremst, verteilt oder gestoppt werden müssen. Auch andere Güter, wie z.B. der Verpackung dienende frischlackierte Dosen können bei diesen Bewegungsabläufen beschädigt werden. Erfindungsgemäß werden die geschilderten Bewegungsabläufe durch die unterschiedliche Anordnung der Luftaustritte und die Verformung der Förderbahn so gestaltet, daß die genannten Nachteile weitgehend vermieden werden, weil die geförderten Güter von der Berührung der Bahnfläche abgehalten werden. Hierzu ist die Förderbahn selbst zunächst in bekannter Weise U- und somit trogförmig gestaltet und den Abmessungen des jeweils zu fördernen Gutes angepaßt. Erfindungsgemäß kann sie auch V- oder halbrundförmig, vieleckig oder in beliebigen Kombinationen hiervon, dabei nach oben offen, gestaltet sein, wie in Abb. 1 dargestellt. Auch werden bekannte Formen der Luftaustritte im Förderbahnboden (2) wie schräge Bohrungen, senkrechte Löcher, sowie Schlitze verwendet. Letztere werden nun erfindungsgemäß nicht allein wie nach Figur 2 in der DE - PS 26454464 mit der Normalen zur dortigen Schlitzfläche 17 parallel zur Längsachse der Förderbahn angeordnet, sondern in einem Winkel zu dieser, der zwischen 5 und 35° je nach Art des Fördergutes liegen kann. Abb. 2 zeigt einen Ausschnitt aus einem Förderboden (2), worin die nun schrägen Schlitze beidseitig der Förderbahnachse (7) mit beispielsweise 20° ausgeführt sind. Diese Ausrichtung bewirkt neben dem Vorschub in Förderrichtung eine zweite Kraftkomponente senkrecht dazu, so daß bei symmetrischer Anordnung dieser Schlitz beiderseits der Längsachse der Förderbahnachse (7) je nach Abmessung des Fördergutes diese stets in der Mitte der Bahn gehalten wird, keiner Führung durch die Seitenwände bedarf und diese nicht berührt.

Schräg angeordnete Schlitze bewirken auch, daß bei stückartigen Gütern mit ebenem, glatten Boden oder nur in Förderrichtung verlaufenden, durchgehend furchenartigen Vertiefungen, zudem mit ebenen glatten Seitenwänden, möglich ist, auf die Seitenwände einer Bahn zu verzichten. Diese schräge Anordnung der Schlitze bewirkt keinen höheren Luftverbrauch als bei winkelrechter Anordnung zur Förderbahnachse (7) mit Seitenführungen. Wenn man an so unterschiedlichen Fördergüter wie an die schon genannten, an Platten, Kartons, Schachteln, Glas- und Kunststoffartikeln, Schrauben oder Bleistifte denkt, dann ist verständlich, daß Art und Anordnung solcher Luftaustritte der Größe, Standfläche und dem Flächengewicht des Fördergutes angepaßt sein müssen.

So kann die Schlitzbreibe (4) zwischen 3 und 100 mm betragen, die Schlitzhöhe (5) etwa 0,5 - 3 mm. Die senkrechten Löcher (6), deren Luftaustritt das Anheben der Fördergüter bewirkt, haben zweckmäßigerweise einen Durchmesser von ca. 1 - 3 mm. Die notwendige Luft strömt durch diese Öffnungen aus einem Kanal (1), der bei U-förmigen Trögen mindestens unter der vollen Breite des waagerechten Förderbodens (2) angeordnet ist. Bei besonders empfindlichen Fördergütern oder solchen mit größeren Seitenflächen ist es zweckmäßig, auch an den Seitenwänden (3) der Förderbahn Luftkanäle und entsprechende Öffnungen anzubringen, um mittels eines auch hier entstehenden Luftschleiers das Berühren der Seitenwände zu vermeiden. Im gezeigten Beispiel nach Abb. 1 haben Förderbahn (2) und Seitenwände (3) einen gemeinsamen Luftkanal. Solch zusätzlicher Luftkanal mit entsprechenden Luftaustritten ist in jedem Fall in Kurvenabschnitten einer Förderbahn an der Seitenwand mit dem größeren Radius notwendig, um der auf die Fördergüter einwirkenden Fliehkraft entgegenzuwirken.

Insgesamt gesehen sind erfindungsgemäß folgende Kombinationen der Schlitze je nach Fördergut zweckmäßig: Die Normale zur Schlitzfläche parallel zur Längsachse der Förderbahn (7) oder in einem Winkel zwischen 5 und 35° zu ihr und Schlitze in den Seitenwänden mit ihrer Normalen parallel zur Längsachse der Förderbahn (7) sowie in einfacheren Fällen Schlitze im genannten Winkelbereich im Förderboden (2) allein, in allen Fällen symmetrische Anordnung zur Längsachse der Förderbahn (7).

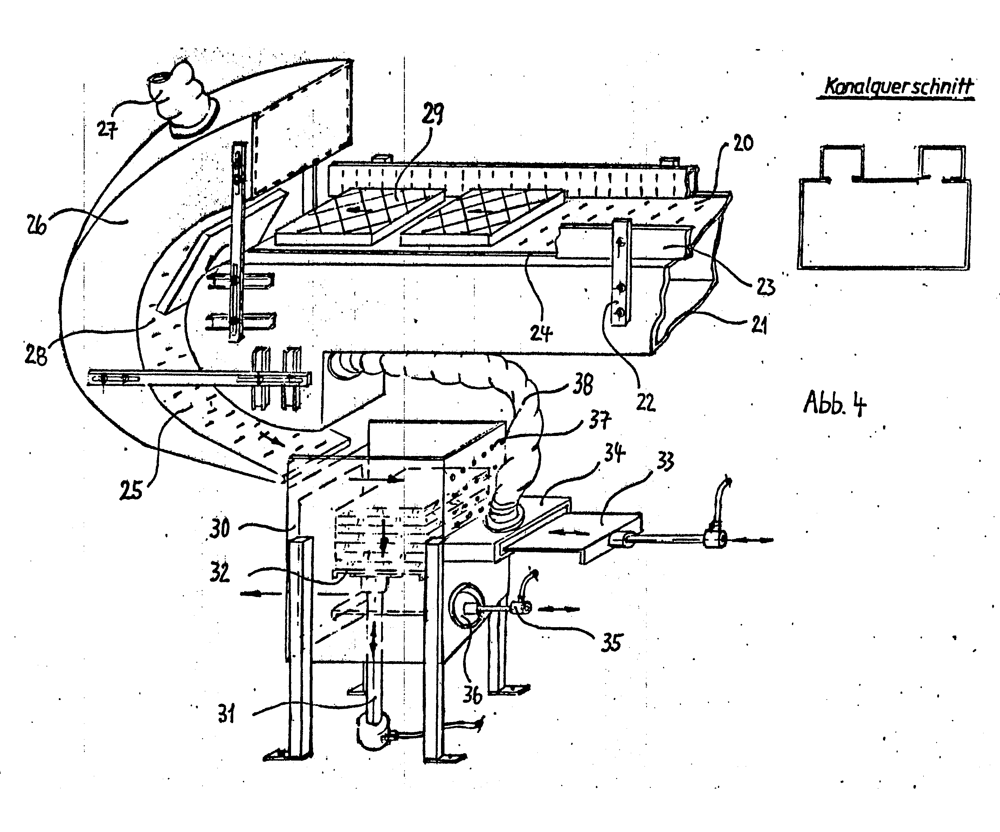

Vielfach werden zu Beginn der pneumatischen Förderung die Güter beschleunigt und am Ende wieder gebremst. Ersteres wird erfindungsgemäß dadurch besonders intensiv gestaltet, daß die Bahn mit einem breiten Auslaß für die Förderluft beginnt, der sich über die gesamte Bahnbreite erstreckt, im Falle einer U-förmigen Förderbahn über die gesamte Breite des Förderbodens (2). Das Abbremsen geschieht erfindungsgemäß in der Weise, daß in dem hierfür vorgesehenen Abschnitt der Förderbahn die Zahl der Luftschlitze (4,5) im Verhältnis zur Zahl der Hublöcher (6) dermaßen verringert wird, daß das Schweben beibehalten, die Geschwindigkeit der Fördergüter aber beliebig bis zum Stillstand reduziert werden kann. Bei der Forderung nach Wenden, Drehen oder Kippen des Fördergutes innerhalb der pneumatischen Förderung werden diese Bewegungsarten erfindungsgemäß dadurch gelöst, daß der Verlauf der Förderbahn in einem solchen Teilabschnitt der Gesamtlänge die gewünschte Bewegung ohne Änderung des Querschnittprofiles der Förderbahn erzwingt. Soll beispielsweise das Fördergut im 90° seitwärts zur Förderrichtung gedreht werden, wird die Förderbahn um diesen Winkel um ihre Längsachse verwunden. Soll das Fördergut um 180° gedreht werden, kann die beschriebene Verdrehung soweit verlängert, oder die Bahn längs ihrer Achse um diesen Winkel nach oben oder unten gekippt werden. Letzteres ist in Abb. 4 dargestellt. In allen Fällen muß die offene Bahn in diesen Abschnitten weitgehend geschlossen werden, um ein Herausfliegen der Fördergüter zu vermeiden. Um auch hierbei Berührungen weitgehend zu verhindern, werden die Abdeckungen mit einem Luftkanal (26) und entsprechenden und beschriebenen Luftaustritten versehen, deren Anordnung mit fortschreitender Drehbewegung verdichtet, während die in dem ursprünglichen Förderboden (20) gleichzeitig verringert wird. Die Drehung um die Längsachse der Förderbahn erhält bei U-förmigem Trog die dabei nach unten zu liegen kommende Seitenwand ebenfalls zunehmend mehr Luftaustritte. Bei langen Förderbahnen oder Abschnitten stark unterschiedlichen Luftverbrauches wie Steigung, Gefälle oder den beschriebenen Drehabschnitten ist es vorteilhaft und erfindungsgemäß möglich, mit nur einem Ventilator auszukommen, wenn der Luftkanal entsprechend oft waagerecht unterteilt wird und z.B. nach Ende des ersten Bahnabschnittes mit Luftbedienung durch den obersten Kanal nun die Luft für den 2. Bahnabschnitt aus dem nächst tieferen Kanal in den obersten Kanal durch eine entsprechende Öffnung eintritt. Die Verteilung der Luft auf die einzelnen Segmente wird mit Drosselklappen eingestellt. So werden vorteilhaft Aufwendungen für die Lufterzeugung und deren elektrischen Versorgung und Steuerung eingespart, sowie örtlich bedintem Platzmangel für sonst weitere Ventilatoren begegnet. In Abb. 3 ist eine solche Anlage dargestellt. Der Ventilator (8) bläst die Förderluft in die beiden durch ein Blech (13) getrennten Kanäle (12) und (14) der Förderbahn (9), die die zu fördernden Güter aus der Rutsche (10) erhält. Aus dem oberen Kanal (12) tritt die Förderluft durch Schlitze im Förderboden (11) in die Förderbahn (9) ein. Nach Ende des ersten Bahnabschnittes und damit des ersten Luftkanals (12) gelangt dann im Krümmer (15) die Luft aus dem unteren Kanal (14) an den Förderboden (11). Die Luftmengenverteilung für beide Kanäle (12) und (14) wird mit den beiden Drosselklappen (16) und (17) eingestellt.

Um bei kurzfristigen Maschinenausfällen nicht auch die im Produktionsprozess vorhergehenden Maschinen stillsetzen zu müssen, wird am Ende einer pneumatischen Förderbahn meistens eine Staufläche vorgesehen, um den geförderten Gütern eine vorübergehende Lagerfläche zu geben. Um die Fördergeschwindigkeit der auf der Bahn befindlichen Güter zu verringern und so das Aufprallen eines geförderten Gegenstandes auf den vorhergehenden und eben zuletzt gestauten zu vermindern, wie auch somit die Kapazität der Staufläche zu vergrößern, wird erfindungsgemäß ein drehzahlregelbarer Ventilator verwendet, dessen Drehzahl durch optische oder andere berührungslose Impulsgeber am Beginn und Ende der Staufläche gesteuert wird. Statt der Drehzahl- kann auch ein Drallregler eingesetzt werden. Hiermit wird insbesondere das Schweben der gestauten Güter beibehalten, da deren gemeinschaftliches Wiederanheben nach Ende der Betriebsunterbrechung schwierig und zeitraubend ist, wenn sie nach Abschalten des Ventilators auf den Förderboden abgesunken waren.

Oftmals müssen nach einem auch pneumatischen Fördergang die Güter auf anschließend parallel arbeitenden Maschinen verteilt werden. Auch hier wird die Berührung der Seitenwände der einzelnen Zuführbahnen durch Luftschleier aus den beschriebenen Luftöffnungen in den Seitenwänden weitgehend

0198518

vermieden.

In allen Fällen müssen die Güter nach dem pneumatischen Fördergang gestapelt werden. Eine solche Anlage ist in Abb. 4 dargestellt. Die vorhergehende Wendevorrichtung (20-28) ist natürlich keine unabdingbare Voraussetzung. Die Platten (29) rutschen wie auf einem Luftkissen schwebend beschädigungsfrei in die Stapelvorrichtung (30) hinein und stapeln sich aufeinander, wobei der Hubzylinder (31) mit seinem die Platten tragenden Teller (32) sich so nach unten bewegt, daß bei jeder neu ankommenden Platte (29) der Teller (32) und damit der Stapel sich um die Dicke einer Platte (29) gesenkt haben. Wenn die gewünschte Anzahl der Platten (29) eines Stapels erreicht ist, wird der Schieber (33) über den Stapel geschoben und ein zweiter Schieber (35) mit senkrechter Druckplatte (36) schiebt den Stapel auf eine beliebige Vorrichtung zum Weitertransport oder zur Weiterverarbeitung, wie z.B. einer Schrumpfverpackungsanlage. Dann wird der Schieber (35,36) schnell zurückgezogen und der Teller (32) wieder schnell nach oben bis unter den Schieber (33) gefahren, der zwischenzeitlich bis zu 4 Platten aufgenommen hat. Dieser wird zurückgezogen und der Teller (32) übernimmt diese Platten und senkt sich wieder langsam. Die Bewegungen des Hubzylinders (31) und der Schieber (31,35) werden über eine nicht dargestellte optische Zählvorrichtung gesteuert. Um die aus der Förderanlage (1-28) mitschießende Luft entweichen zu lassen, ist die Rückwand (37) des dreiseitigen Gehäuses (30) gelocht. Der Schlauch (38) führt dem Schiebergehäuse (34) Luft zu, die nach vorne austretend das Aufprallen der ersten Platte auf den vorgeschobenen Schieber (33) mildert.

Patentansprüche

1. Anlage zum pneumatischen Schwebendfördern stückartiger Güter in Rinnen oder ähnlich offenen, im Querschnitt dem jeweiligen Gut angepaßten und abschnittsweise abgedeckten Behältnissen, letzteres bei Verwinden des Behältnisses um seine Längsachse oder dessen Kippen mit ihr (6) zwecks gleichzeitiger Dreh- oder Kippbewegung des Fördergutes, mittels Zuführung von Luft oder anderen geeigneten Gasen durch einen entsprechend ausgebildeten mit Öffnung versehenen Förderboden, Seitenwände und abschnittsweisen Abdeckungen aus einem darunter, bzw. darüber oder daneben befindlichen und mehrfach unterteilbaren Hohlraum, sowie zum Pneumatischen Beschleunigen, Bremsen, Verteilen, Stauen, Stoppen und Stapeln.

2. Anlage nach Anspruch 1 dadurch gekennzeichnet, daß der Querschnitt des offenen Behältnisses rechteckig, U-, V-, oder halbrundförmig, sowie vieleckig und in Kombinationen davon oder auch ohne jede wandähnliche Seitenflächen sein kann.

3. Anlage nach Anspruch 1-2 gekennzeichnet durch Luftaustritt aus Schlitzen (4,5) und Löchern (6) oder schrägen, zur Bahnmitte und Förderrichtung hin gerichteten Bohrungen, sowohl im Förderboden (2) als auch bei dies bedingenden Fördergütern in den Seitenwänden (3), in Kurven in der Seitenwand mit dem größeren Radius, mit zunehmenden Verlauf eines Drehvorganges verstärkt in der nach unten verdrehten Seitenwand und auch beim Kippen mit der Längsachse der Förderbahn (7) in der Abdeckung (28), dabei im ursprünglichen Förderboden (20) abnehmend.

4. Anlage nach Anspruch 1-3 dadurch gekennzeichnet, daß die Normale der Schlitzfläche (4,5) parallel zur Längsachse der Förderbahn (7) oder in einem spitzen Winkel zwischen 5 und 35 Grad zu ihr gerichtet ist, die Schlitze symmetrisch zur Längsachse der Förderbahn (7) und in den Seitenwänden mit Luftaustritt in Förderrichtung angeordnet sind oder der Förderboden allein Schlitze (4,5) enthält, diese symmetrisch zur Längsachse der Förderbahn (7) und gleichzeitig schräg zu ihr in einem Winkel zwischen 5 und 35 Grad angeordnet sind.

5. Anlage nach Anspruch 1-4 dadurch gekennzeichnet, daß der Luftkanal einer Förderbahn (9) mehrfach waagerecht geteilt sein kann und nach Ende eines Bahnabschnittes die Luft für den nächsten aus dem nächst tiefer liegenden Luftkanal durch eine entsprechende Öffnung zum Förderboden (11) gelangt, die Luft auf die einzelnen Kanäle (12,14) mit Drosselklappen (16,17) verteilt wird.

6. Anlage nach Anspruch 1-5 dadurch gekennzeichnet, daß am Anfang der Förderbahn ein Schlitz sich über deren gesamte Breite erstreckt und vor dem Ende der Förderbahn die Zahl der Schlitze (4,5) kontinuierlich verringert, die Zahl der Hublöcher (6) hingegen konstant bleibt.

7. Anlage nach Anspruch 1-6 dadurch gekennzeichnet, daß am Anfang und Ende eines zum Stauen vorgesehenen Bahnabschnittes berührungslose Impulsgeber die Drehzahl des zugehörigen Luftventilators oder dessen Drallregler steuern.

8. Anlage nach Anspruch 1-7 dadurch gekennzeichnet, daß in den Zuführkanälen zu parallell arbeitenden Maschinen auch deren Seitenwände mit Schlitzen versehen sind.

9. Anlage nach Anspruch 1-8 dadurch gekennzeichnet, daß am Ende einer solchen Förderbahn eine Stapelvorrichtung (30-38) angebracht sein kann, wobei ein sich nach unten bewegender Zylinder (31) mit Teller (32) den wachsenden Stapel aufnimmt, ein Schieber (35,36) den Stapel ausstößt und ein weiterer Schieber (33,34) währenddessen die ankommenden Güter zwischenstapelt, wobei ein Schlauch (38) dem Schiebergehäuse (34) Luft zuführt.

0198518

Abb. 1

Abb. 2

0198518

Abb.3

Kanalquerschnitt

Abb. 4

27 29 20 26 23 28 21 24 22 25 38 37 34 33 30 32 35 31 36

0198518